# EUROPEAN PATENT APPLICATION

(11) **EP 4 303 040 A1**
(43) Date of publication of application: **10.01.2024**
(21) Application number: 22762341.0
(22) Date of filing: 24.01.2022
(51) Int. Cl.: B60G 7/00, B60G 7/04, F16F 13/08

(54) **BUSHING, SUSPENSION SYSTEM AND VEHICLE**

(30) Priority: 01.03.2021 CN 202110225588
(71) Applicant: Great Wall Motor Company Limited, Baoding, Hebei 071000 (CN)
(72) Inventor: BAI, Yaoming, Baoding, Hebei 071000 (CN); FENG, Qiang, Baoding, Hebei 071000 (CN)
(74) Representative: Klunker IP Patentanwälte PartG mbB
(86) International application number: PCT/CN2022/073539
(87) International publication number: WO 2022/183873

(57) **Abstract**

The application provides a bushing, a suspension system and a vehicle, wherein the bushing body (1) includes a first inner tube (11), a first outer tube (12) and a first rubber body (13); an outer wall of the first inner tube (11) is provided with a protruding structure (111); the first outer tube (12) includes a plurality of arc-shaped plates (121), the plurality of arc-shaped plates (121) are distributed at intervals along a circumferential direction of the first outer tube (12), and a first gap exists between two adjacent arc-shaped plates (121), and the first outer tube (12) is sleeved on the outer wall of the first inner tube (11), and a second gap exists between the first outer tube (12) and the first inner tube (11); the first rubber body (13) is disposed in the second gap and for connecting the first inner tube (11) and the first outer tube (12) by vulcanizing. The bushing may have a large radial rigidity, a large axial rigidity, and a low torsional rigidity, thereby enabling a vehicle to have both good driving smoothness and manipulation stability.

## Description

The present application claims the priority of the Chinese patent application filed on March 1^{th}, 2021 before the CNIPA (China National Intellectual Property Administration) with the application number of 202110225588.0 and the title of "bushing, suspension system and vehicle", which is incorporated herein in its entirety by reference.

### TECHNICAL FIELD

The present application relates to the technical field of vehicle components and, more particularly, to a bushing, suspension system and vehicle.

### BACKGROUND

A suspension system is an important component on a vehicle, which plays a crucial role in driving smoothness and handling stability of the vehicle. As an important element of the suspension system for carrying loads, a control arm is generally connected with a sub-frame of the vehicle by means of a bushing. Therefore, as a hub, the bushing is subjected to relatively complex force in the movement process of the vehicle, mainly bears axial and radial force during accelerating and braking, and needs to follow the suspension system to move, so that produce torsional moment is generated.

In practical application, under the condition that the vehicle is required to have good handling stability, the bushing needs to provide large radial rigidity and large axial rigidity, and under the condition that the vehicle is required to have good driving smoothness, the bushing needs to provide low torsional rigidity. However, in the conventional technology, it is difficult for the bushing to satisfy the large radial rigidity, the large axial rigidity and the low torsional rigidity at the same time, so that the vehicle is difficult to satisfy both the driving smoothness and the operation stability.

### SUMMARY

In view of the above, the present application aims to provide a bushing, to solve a technical problem that it is difficult for the bushing to satisfy large radial rigidity, large axial rigidity and low torsional rigidity at the same time, causing the vehicle is difficult to satisfy both driving smoothness and operation stability.

In order to achieve the above-mentioned purpose, the technical solutions of the present application are realized as follows:

A bushing, including a bushing body, wherein the bushing body includes a first inner tube, a first outer tube and a first rubber body;
an outer wall of the first inner tube is provided with a protruding structure;
the first outer tube includes a plurality of arc-shaped plates, the plurality of arc-shaped plates are distributed at intervals along a circumferential direction of the first outer tube, a first gap exists between two adjacent arc-shaped plates, the first outer tube is sleeved on the outer wall of the first inner tube, and a second gap exists between the first outer tube and the first inner tube;
the first rubber body is disposed in the second gap and for connecting the first inner tube and the first outer tube by vulcanizing.

Further, the plurality of the arc-shaped plates are evenly distributed.

Further, the bushing further includes a bushing component;
both ends of the bushing body are respectively provided with the bushing component, and the two bushing components are symmetrically arranged, one bushing component is in interference fit with one end of the bushing body, and the other bushing component is in interference fit with the other end of the bushing body.

Further, each of two the bushing components includes a second inner tube, a second outer tube and a second rubber body;
the second outer tube is sleeved on an outer wall of the second inner tube, a third gap exists between the second outer tube and the second inner tube, and the second rubber body is disposed in the third gap for connecting the second inner tube and the second outer tube by vulcanizing;
one end of the first inner tube is sleeved on the outer wall of one of the second inner tubes (herein after, sometimes also referred as "one second inner tube") and is in interference fit with the one of the second inner tube, and the other end of the first inner tube is sleeved on the outer wall of the other second inner tube and is in interference fit with the other second inner tube;
one of second outer tubes (herein after, sometimes also referred as "one second outer tube") is sleeved on the one end of the outer wall of the first outer tube and is in interference fit with the one end of the outer wall of the first outer tube, and the other second outer tube is sleeved on the other end of the outer wall of the first outer tube and is in interference fit with the other end of the outer wall of the first outer tube.

Further, each of the second inner tubes includes a second inner tube body and a first annular end seat which are coaxially arranged;
the first annular end seat is disposed at one end of the second inner tube body away from the bushing body, and a cross-sectional area of the first annular end seat is larger than that of the second inner tube body;
one end of the first inner tube is sleeved on an outer wall of one of the second inner tube bodies and is in interference fit with the one of the second inner tube bodies, and the other end of the first inner tube is sleeved on an outer wall of the other second inner tube body and is in interference fit with the other second inner tube body.

Further, the second outer tube is sleeved on the second inner tube body and includes a second outer tube body and a second annular end seat which are coaxially arranged;
the second outer tube body is away from the first annular end seat, the second annular end seat is close to the first annular end seat, and a cross-sectional area of the second annular end seat is larger than that of the second outer tube body;
one end of one of the second outer tube bodies (herein after, sometimes also referred as "one second outer tube body") away from the second annular end seat is sleeved on one end of the outer wall of the first outer tube and is in interference fit with one end of the outer wall of the first outer tube, and the other end of the other second outer tube body away from the second annular end seat is sleeved on the other end of the outer wall of the first outer tube and is in interference fit with the other end of the outer wall of the first outer tube.

Further, a third sub-gap exists between the outer wall of the second inner tube body and an inner wall of the second outer tube body;
a fourth sub-gap exists between an end face of the first annular end seat away from the bushing body and an end face of the second annular end seat away from the bushing body;
the third gap is formed by the third sub-gap and the fourth sub-gap.

Further, in an axial direction of the first inner tube, a shape of the protruding structure is arc-shaped, and the arc-shaped is a convex arc relative to the outer wall of the first inner tube;
a first transition arc is disposed between one end of the protruding structure and one end of the first inner tube, and a second transition arc is disposed between the other end of the protruding structure and the other end of the first inner tube.

Compared with the conventional technology, the bushing according to the present application has at least the following advantages:

In the embodiment of the present application, by disposing the protruding structure on the outer wall of the first inner tube, the radial rigidity of the bushing body may be improved, and the torsional rigidity of the bushing body may be reduced. In practical application, the axial rigidity of the bushing body may be increased correspondingly with the increase of the radial rigidity of the bushing body. The first outer tube includes a plurality of arc-shaped plates which are distributed at intervals along a circumferential direction of the first outer tube. Since a first gap exists between two adjacent arc-shaped plates, in this way, under the condition that the bushing body squeezes the first rubber body in the process of using, the compression amount of the first rubber body is increased, so that the torsional rigidity of the bushing body may be reduced. It may be seen that, the bushing of the present embodiment may simultaneously satisfy large radial rigidity, large axial rigidity and low torsional rigidity, so that a vehicle may both satisfy driving smoothness and manipulation stability.

Another purpose of the present application is to provide a suspension system, to solve the technical problem that it is difficult for the bushing to satisfy the large radial rigidity, the large axial rigidity and the low torsional rigidity at the same time, causing the vehicle is difficult to satisfy both the driving smoothness and the operation stability.

In order to achieve the above-mentioned purpose, the technical solutions of the present application are realized as follows:
a suspension system, including the bushing above-mentioned.

Compared with the conventional technology, the suspension system has the same advantages as the bushing, and details are not described herein again.

Another purpose of the present application is to provide a vehicle, to solve the technical problem that it is difficult for the bushing to satisfy the large radial rigidity, the large axial rigidity and the low torsional rigidity at the same time, causing the vehicle is difficult to satisfy both the driving smoothness and the operation stability.

In order to achieve the above-mentioned purpose, the technical solutions of the present application are realized as follows:
a vehicle, including the suspension system above-mentioned.

Compared with the conventional technology, the vehicle has the same advantages as the suspension system, and details are not described herein again.

### BRIEF DESCRIPTION OF THE DRAWINGS

The drawings, which constitute a portion of the present application, are intended to provide a further interpretation of the present application. The illustrative embodiments of the present application and their explanation are intended to interpret the present application, and do not inappropriately limit the present application. In the drawings:
FIG. 1 is a schematic diagram of a three-dimensional structure of a bushing body in the bushing according to an embodiment of the present application;
FIG. 2 is a cross-sectional view taken along A-A line in FIG. 1;
FIG. 3 is a cross-sectional view of a first inner tube of the bushing body in FIG. 2;
FIG. 4 is a schematic diagram of a three-dimensional structure of a bushing according to an embodiment of the present application;
FIG. 5 is a cross-sectional view taken along B-B line in FIG. 4;
FIG. 6 is a schematic diagram of a three-dimensional structure of a bushing component in the bushing according to an embodiment of the present application; and
FIG. 7 is a cross-sectional view taken along C-C line in FIG. 6.

### Description of attached drawing markings:

1- bushing body, 11- first inner tube, 12- first outer tube, 13- first rubber body, 111-protruding structure, 112- first transition arc, 113- second transition arc, 121- arc-shaped plate, 122- first gap, 2- bushing component, 21- second inner tube, 211- second inner tube body, 212-first annular end seat, 22- second outer tube, 221- second outer tube body, 2211- first part of second outer tube body, 2212- second part of second outer tube body, 222- second annular end seat, 23- second rubber body, 24- protruding point.

### DETAILED DESCRIPTION

It should be noted that, subject to the avoiding of any conflict, embodiments and features of the embodiments of the present application may be combined.

In the conventional technology, a bushing has a shape of cylindrical, and includes an inner tube, an outer tube and a rubber body, wherein the outer tube is sleeved on the outer wall of the inner tube, and the rubber body connects an inner wall of the outer tube with the outer wall of the inner tube by means of a vulcanization process. The bushing mainly bears axial force and radial force in the process of accelerating and braking of the vehicle, and needs to follow a suspension system to move to generate a torsional moment. Therefore, the bushing needs to have the following characteristics: radial static rigidity, axial static rigidity and torsional rigidity. The radial static rigidity X_{radial}: is a ratio of force applied in a radial direction force F_{radial} (the inner tube is fixed and the force is applied on the outer tube) to a radial displacement S_{radial}, that is, X_{radial} =F_{radial} /S_{radial}. The axial static rigidity Zₐₓᵢₐₗ: is a ratio of force applied along an axial direction Fₐₓᵢₐₗ (the outer tube is fixed and the force is applied on the inner tube) to a axial displacement Sₐₓᵢₐₗ, that is, Zₐₓᵢₐₗ =Fₐₓᵢₐₗ /Sₐₓᵢₐₗ. The torsional rigidity Tₐₓᵢₐₗ: is a ratio of torque Mₐₓᵢₐₗ rotating along the axial direction Z (the inner tube is fixed and the force is applied on the outer tube) to a rotation angle Aₐₓᵢₐₗ, that is, Tₐₓᵢₐₗ =Mₐₓᵢₐₗ / Aₐₓᵢₐₗ.

For existing bushings, the radial rigidity of the bushing is generally adjusted by adjusting hardness and structure of the rubber body, and the axial rigidity and torsional rigidity may be increased with the increase of the radial rigidity. However, the adjustment of the hardness and structure of the rubber body has no obvious effect on the increase of the axial rigidity, it is almost impossible to be achieved especially for bushings with axial rigidity of 5000 N/mm or more.

In some existing bushings, a cover is disposed at one end of the bushing, and the axial rigidity is made to be increased by the inner tube and the outer tube squeezing the rubber body, and the rubber is compressed to make the rigidity to be increased. Although this structure may generate rubber compression, in an axial direction, since a gap exists between an end of the rubber body close to the cover, so that the end of the rubber body close to the cover and the cover squeeze the rubber may not generate a particularly large increase amount in rigidity, and an idle stroke exists before the rigidity is increased, causing discontinuous rigidity change, and affecting driving smoothness of a vehicle. In addition, the end of the rubber body away from the cover and the cover squeeze the rubber body, so that the rubber is sheared to generate rigidity change, but it does not generate a particularly large increase amount in rigidity.

In addition, in a use process of the existing bushing, the cover may be squeezed and rubbed with the rubber body, so that the existing bushing has poor durability, and wear failure may occur after long-term use.

Hereinafter, the present application will be described in detail with reference to the drawings and embodiments.

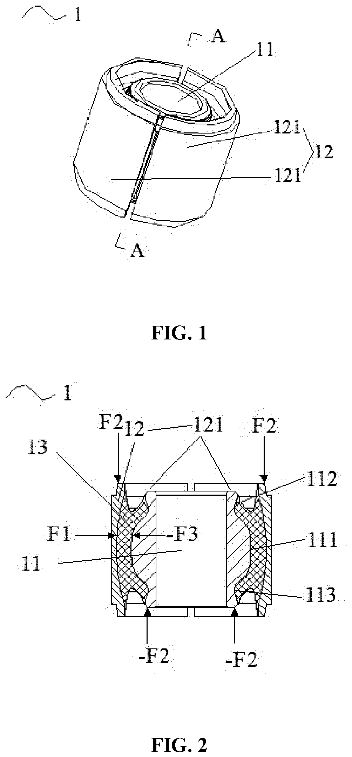

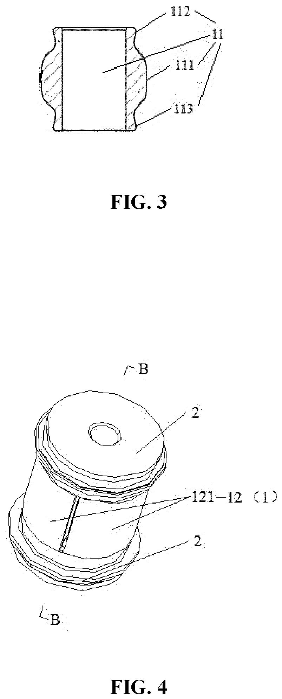

In the embodiment of the present application, referring to FIGs. 1 to 3, FIG. 1 shows a schematic diagram of a three-dimensional structure of a bushing body in the bushing described in an embodiment of the present application, FIG. 2 is a cross-sectional view taken along A-A line in FIG. 1, and FIG. 3 is a cross-sectional view of a first inner tube of the bushing body in FIG. 2. The present embodiment provides a bushing, which may particularly include a first inner tube 11, a first outer tube 12 and a first rubber body 13;an outer wall of the first inner tube 11 is provided with a protruding structure 111 The first outer tube 12 includes a plurality of arc-shaped plates 121, the plurality of arc-shaped plates 121 are distributed at intervals along a circumferential direction of the first outer tube 12, a first gap exists between two adjacent arc-shaped plates 121, the first outer tube 12 is sleeved on an outer wall of the first inner tube 11, and a second gap exists between the first outer tube 12 and the first inner tube 11. The first rubber body 13 is disposed in the second gap and for connecting the first inner tube 11 and the first outer tube 12 by vulcanizing.

Particularly, as shown in FIGs. 1 to 3, the first inner tube 11 is a hollow cylinder, and the first outer tube 12 includes a plurality of arc-shaped plates 121, which are distributed at intervals along a circumferential direction of the first outer tube 12, that is, the shape of the first outer tube 12 surrounded by the plurality of arc-shaped plates 121 is also a hollow cylinder, and the first outer tube 12 is sleeved on the outer wall of the first inner tube 11, and the second gap exists between the first outer tube 12 and the first inner tube 11. The first rubber body 13 is disposed in the second gap and for connecting the first inner tube 11 and the first outer tube 12 by vulcanizing. Of course, in the present embodiment, the specific shapes of the first outer tube 12 and the first inner tube 11 may not be limited, and they may also be other shapes, for example a hollow elliptical column and the like, and the specific shapes may be adopted according to the actual situation. It should be noted that, the present embodiment will be described below by taking a hollow cylinder as an example.

Particularly, as shown in FIGs. 2 and 3, a protruding structure 111 is disposed on the outer wall of the first inner tube 11, so that the protruding structure 111 may increase the radial rigidity of the bushing body 1 and reduce the torsional rigidity of the bushing body 1. In practical application, the axial rigidity of the bushing body 1 may increase correspondingly with the increase of the radial rigidity of the bushing body 1. As shown in FIGs. 1 and 2, since the first gap exists between two adjacent arc-shaped pieces 121, under the condition that the bushing body 1 squeezes the first rubber body 13 during use, the compression amount of the first rubber body 13 is increased compared with the conventional technology, so that the torsional rigidity of the bushing body 1 may be reduced, and the fatigue durability of the bushing body 1 may also be improved. It may be seen that, the bushing of the present embodiment may have large radial rigidity, large axial rigidity and low torsional rigidity at the same time, so that the vehicle may both satisfy good driving smoothness and manipulation stability.

According to the embodiment of the present application, the plurality of arc-shaped plates 121 are evenly distributed, so that under the condition that the bushing body 1 squeezes the first rubber body 13 during use, the more evenly the first rubber body 13 being squeezed, the better the fatigue durability of the bushing body 1. It should be noted that, two arc-shaped plates 121 are shown in the present embodiment. Of course, other number of arc-shaped plates may also be provided, for example, four arc-shaped plates 121, six arc-shaped plates 121 and the like, and the specific number of arc-shaped plates 121 is not limited in the present embodiment. In practical application, the more the number of arc-shaped plates 121, the more evenly the first rubber body 13 is squeezed, and the better the fatigue durability of the bushing body 1. However, the more the number of arc-shaped plates 121 is, the higher the cost will be. Therefore, in the present embodiment, the number of arc-shaped plates 121 is preferably two for cost consideration.

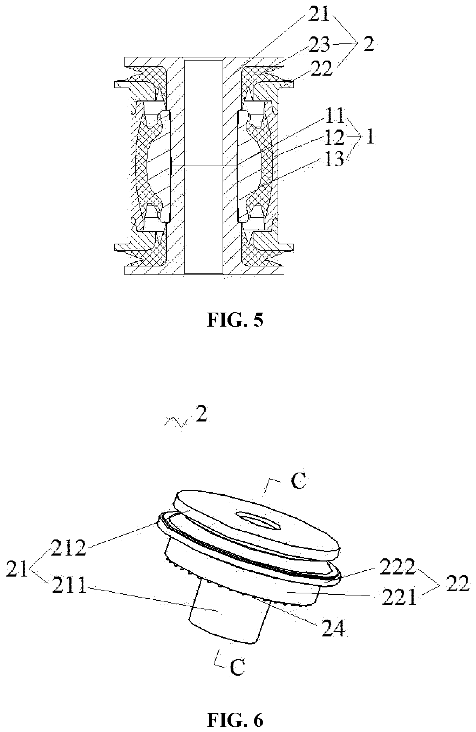

In an embodiment of the present application, referring to FIGs. 1 to 5, a schematic diagram of a three-dimensional structure of the bushing according to an embodiment of the present application is shown in FIG. 4. A cross-sectional view taken along B-B line in FIG. 4 is shown in FIG. 5. The bushing further includes a bushing component 2, both ends of the bushing body 1 are respectively provided with the bushing component 2, and the two bushing components 2 are symmetrically arranged, one (upper) bushing component 2 is in interference fit with one end (upper end) of the bushing body 1, and the other (lower) bushing component 2 is in interference fit with the other end (lower end) of the bushing body 1. The bushing provided in this way has a simple structure, and the force on both ends of the bushing is balanced.

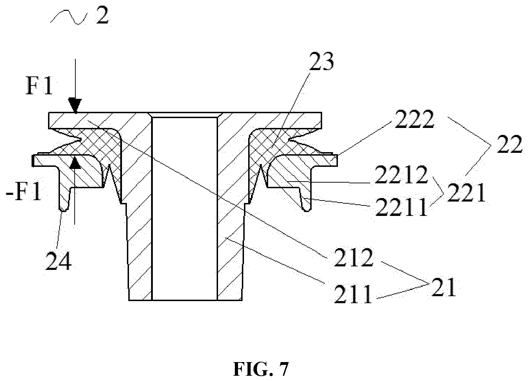

According to the embodiment of the present application, referring to FIGs. 1 to 7, a schematic diagram of a three-dimensional structural of the bushing component in the bushing according to an embodiment of the present application is shown in FIG. 6, and FIG. 7 is a cross-sectional taken along C-C line in FIG. 6, wherein the bushing component 2 is a hollow tubular column structure. Each of the two bushing components 2 includes a second inner tube 21, a second outer tube 22 and a second rubber body 23, the second outer tube 22 is sleeved on an outer wall of the second inner tube 21, a third gap exists between the second outer tube 22 and the second inner tube 21, and the second rubber body 23 is disposed in the third gap for connecting the second inner tube 21 and the second outer tube 22 by vulcanizing. One end of the first inner tube 11 is sleeved on the outer wall of one of the second inner tubes 21 and is in interference fit with the one of the second inner tubes 21, and the other end of the first inner tube 11 is sleeved on the outer wall of the other second inner tube 21 and is in interference fit with the other second inner tube 21. The one of the second outer tubes 22 is sleeved on the one end of the outer wall of the first outer tube 12 and is in interference fit with one end of the outer wall of the first outer tube 12, and the other second outer tube 22 is sleeved on the other end of the outer wall of the first outer tube 12 and is in interference fit with the other end of the outer wall of the first outer tube 12.

Particularly, as shown in FIGs. 6 and 7, the bushing component 2 includes a second inner tube 21, a second outer tube 22 and a second rubber body 23. The second outer tube 22 is sleeved on an outer wall of the second inner tube 21, and a third gap exists between the second outer tube 22 and the second inner tube 21. The second rubber body 23 is disposed in the third gap, and the second inner tube 21 and the second outer tube 22 are connected together by means of the second rubber body 23 by vulcanizing.

Particularly, as shown in FIGs. 4 and 5, two bushing components 2 are symmetrically arranged at the upper and lower ends of the bushing body 1 according to the illustrated direction. One end (upper end) of the first inner tube 11 is sleeved on the outer wall of the second inner tube 21 of one bushing component 2, and the upper end of the first inner tube 11 is in interference fit with the second inner tube 21 of one bushing component 1 by means of pressing, so that the upper end of the first inner pipe 11 is in tight fit with the axial direction of the second inner pipe 21 in one bushing component 2. Similarly, the other end (lower end) of the first inner tube 11 is sleeved on the outer wall of the second inner tube 21 of the other bushing component 2, and the lower end of the first inner tube 11 is in interference fit with the second inner tube 21 of the other bushing component 2 by means of pressing, so that the lower end of the second inner tube 11 is in axially tight fit with the second inner tube 21 of the other bushing component 2. The second outer tube 22 of one bushing component 2 is sleeved at one end (upper end) of the outer wall of the first outer tube 12, and the second outer tube 22 of one bushing component 2 is in interference fit with the upper end of the outer wall of the first outer tube 12 by means of pressing, so that the second outer tube 22 of one bushing component 2 is in axially tight fit with the upper end of the first outer tube 12. Similarly, the second outer tube 22 of the other bushing component 2 is sleeved on the other end (lower end) of the outer wall of the first outer tube 12, and the second outer tube 22 of the other bushing component 2 is in interference fit with the lower end of the outer wall of the first outer tube 12 by means of pressing, so that the second outer tube 22 of the other bushing component 2 is in axially tight fit with the lower end of the first outer tube 12. Compared with the conventional technology, the interference fit relationship between the two bushing components 2 and the bushing body 1 in the present embodiment may avoid the squeeze and friction between the cover and the rubber body in the existing bushing, and the bushing in the present embodiment has good fatigue durability, and wear failure may not be caused after long-term use, so that the service life of the bushing is prolonged.

Particularly, when the bushing is subjected to the axial force Fₐₓᵢₐₗ, the second rubber body 23 of one bushing component 2, the first rubber body 13 of the bushing body 1 and the second rubber body 23 of the other bushing component 2 are simultaneously squeezed. As shown in FIG. 7, for one bushing component 2 (upper bushing component), the second rubber body 23 is squeezed by the second inner tube 21 and the second outer tube 22 to make the axial rigidity to be increased, that is, the force F1 and the force -F1 squeeze the second rubber body 23, the axial rigidity of the second rubber body 23 increases. Since the other bushing component 2 (lower bushing component) is symmetrically arranged with the upper bushing component 2, the axial rigidity increase generated by the second rubber body 23 of the lower bushing component 2 has the same principle as that generated by the second rubber body 23 of the upper bushing component 2, and a magnitude of the rigidity increase amount is the same. As shown in FIG. 2, for the bushing body 1, the first rubber body 13 is squeezed by the first inner tube 11 and the first outer tube 12 to make axial rigidity to be increased, that is, the first rubber body 12 is squeezed by the force F2 and the force -F2, and the first rubber body 13 is sheared to make axial rigidity to be increased. It may be seen that, the axial rigidity of the bushing in the present embodiment is a sum of axial rigidity provided by the first rubber body 13 and axial rigidity provided by the two second rubber bodies 23. Compared with the conventional technology, the bushing in the present embodiment may provide larger axial rigidity.

Particularly, as shown in FIG. 2, for the bushing body 1, the first rubber body 13 squeezes the first rubber body 13 by means of the first inner tube 11 and the first outer tube 12 to make radial rigidity to be increased, that is, the first rubber body 13 is squeezed by the force F3 and the force -F3, and the first rubber body 13 is compressed to make radial rigidity to be increased. In practical application, according to the characteristics of rubber, the rigidity increase generated by the rubber is compressed is larger than a rigidity increase amount generated by the rubber is sheared, that is to say, the radial rigidity increase amount generated by compression of the first rubber body 13 is larger than the axial rigidity increase amount generated by the first rubber body 13 is sheared. Moreover, since the outer wall of the first inner tube 11 is provided with the protruding structure 111, large radial rigidity may be achieved. Compared with the conventional technology, the bushing of the present embodiment has larger radial rigidity and axial rigidity, so that the handling stability of a vehicle may be improved.

In an alternative embodiment of the present application, as shown in FIGs. 6 and 7, each of the second inner tubes 21 includes a second inner tube body 211 and a first annular end seat 212 which are coaxially arranged. The first annular end seat 212 is disposed at one end of the second inner tube body 211 away from the bushing body 1, and a cross-sectional area of the first annular end seat 212 is larger than that of the second inner tube body 211. One end of the first inner tube 11 is sleeved on the outer wall of one of the second inner tube bodies 211 and is in interference fit with the one of the second inner tube bodies 211, and the other end of the first inner tube 11 is sleeved on the outer wall of the other second inner tube body 211 and is in interference fit with the other second inner tube body 211.

Particularly, as shown in FIGs. 6 and 7, since the two bushing components 2 are symmetrically arranged, the upper bushing component 2 shown in the figure will be used as an explanation, and the lower bushing component 2 merely needs to refer to the upper bushing component 2. The second inner tube 21 includes a second inner tube body 211 and a first annular end seat 212 coaxially arranged. The first annular end seat 212 is disposed at one end of the second inner tube body 211 away from the bushing body 1. As shown in FIGs 4 and 5, a cross-sectional area of the first annular end seat 212 is larger than that of the second inner tube body 211, that is, a diameter of the first annular end seat 212 is larger than that of the second inner tube body 211.

Particularly, as shown in FIGs. 4 to 7, the upper end of the first inner tube 11 is sleeved on the outer wall of the second inner tube body 211 of the upper bushing component 2, and the upper end of the first inner tube 11 is in interference fit with the second inner tube body 211 of the upper bushing component 2 by pressing, so that the upper end of the first inner pipe 11 is in tight fit with the axial direction of the second inner pipe body 211 of the upper bushing component 2. Similarly, the lower end of the first inner tube 11 is sleeved on the outer wall of the second inner tube body 211 of the lower bushing component 2, and the lower end of the first inner tube 11 is in interference fit with the second inner tube body 211, so that the lower end of the first inner tube 11 is in tight fit with the axial direction of the second inner tube body 211 of the lower bushing component 2.

According to an embodiment of the present application, as shown in FIGs. 4 to 7, the second outer tube 22 is sleeved on the second inner tube body 211 and includes a second outer tube body 22) and a second annular end seat 222 which are coaxially arranged. The second outer tube body 221 is away from the first annular end seat 212, the second annular end seat 222 is close to the first annular end seat 212, and a cross-sectional area of the second annular end seat 222 is larger than that of the second outer tube body 221. One end of one of the second outer tube bodies 221 away from the second annular end seat 222 is sleeved on one end of the outer wall of the first outer tube 12 and is in interference fit with one end of the outer wall of the first outer tube 12, and the other end of the other second outer tube body 221 away from the second annular end seat 222 is sleeved on the other end of the outer wall of the first outer tube and is in interference fit with the other end of the outer wall of the first outer tube 12.

Particularly, as shown in FIGs. 4 to 7, the second outer tube 22 includes a second outer tube body 221 and a second annular end seat 222 which are coaxially arranged. The second outer tube body 221 is away from the first annular end seat 212, and the second annular end seat 222 is close to the first annular end seat 212. A cross-sectional area of the second annular end seat 222 is larger than that of the second outer tube body 221, that is, a diameter of the second annular end seat 222 is larger than that of the second outer tube. One end of one of the second outer tube bodies 221 away from the second annular end seat 222 is sleeved on one end of the outer wall of the first outer tube 12, and is in interference fit with one end of the outer wall of the first outer tube 12, so that the upper end of the first outer tube 12 is axially tight fit with the second outer tube body 211 of the upper bushing component 2. Similarly, one end of the other second outer tube body 221 away from the second annular end seat 222 is sleeved on the other end of the outer wall of the first outer tube 12, and is in interference fit with the other end of the outer wall of the first outer tube 12, so that the lower end of the first outer tube 12 is in axially tight fit with the second outer tube body 211 of the lower bushing component 2.

According to an embodiment of the present application, as shown in FIGs. 5 and 7, a third sub-gap exists between the outer wall of the second inner tube body 211 and an inner wall of the second outer tube body 221, and a fourth sub-gap exists between an end face of the first annular end seat 212 away from the bushing body 1 and an end face of the second annular end seat 222 away from the bushing body 1 The third gap is formed by the third sub-gap and the fourth sub-gap.

Particularly, as shown in FIGs. 5 and 7, a third sub-gap exists between the outer wall of the second inner tube body (211) and the inner wall of the second outer tube body (221), and a fourth sub-gap exists between the end face of the first annular end seat (212) and the end face of the second annular end seat (222) away from the bushing body (1). The third gap is formed by the third sub-gap and the fourth sub-gap. In this way, viewed from the axial direction, the second rubber body 23 of the upper bushing component 2, the first rubber body 13 of the bushing main body 1 and the second rubber body 23 of the lower bushing component 2 are in a continuous state, and the total axial rigidity increase amount of the bushing is a sum of the axial rigidity increase amounts generated by the three rubber bodies are squeezed respectively. Compared with the conventional technology, the bushing according to the present embodiment may have large axial rigidity, and the problem that the axial rigidity changes discontinuously due to the idle stroke during an existing rubber body being squeezed may be avoided. The axial rigidity of the bushing in the embodiment changes continuously, so that the driving smoothness of a vehicle may be improved.

Further, in the axial direction, as shown in FIGs. 5 and 7, a length of the second outer tube 22 is shorter than that of the second inner tube body 211, and the position where the second outer tube 22 is sleeved on the outer wall of the second inner tube body 211 is related to sizes of the third sub-gap and the fourth sub-gap, and the sizes of the third sub-gap and the fourth sub-gap are related to the structure of the second rubber body, and the structure of the second rubber body 23 is related to a magnitude of the axial rigidity of the bushing component 2. Therefore, in the present embodiment, the specific position where the second outer tube 22 is sleeved on the outer wall of the second inner tube body 211 may not be limited, and may be set according to the magnitude of the axial rigidity of the actual requirement. In addition, the specific shape of the second rubber body 23 (the shape of the second rubber body 23 shown in the figure is irregular) may not be limited in the present embodiment, and the second rubber body 23 may completely fill the third sub-gap and the fourth sub-gap, or may also fill portions of the third sub-gap and the fourth sub-gap. But the continuity of the two second rubber bodies 23 and the first rubber body 13 in the axial direction needs to be ensured. The specific structure of the second rubber body 23 is set according to the magnitude of the axial rigidity of the actual requirement.

Further, as shown in FIG. 7, the second outer tube body 221 includes a first part of second outer tube body 2211 and a second part of second outer tube body 2212, and the first part of second outer tube body 2211 is close to the bushing body 1. The second part of second outer tube body 2212 is away from the bushing body 1, and an inner diameter of the first part of second outer tube body 2211 is larger than that of the second part of second outer tube body 2212. That is, a wall thickness of the first part of second outer tube body 2211 is smaller than that of the second part of second outer tube body 2212. As shown in FIG. 5, the first part of second outer tube body 2211 of the upper bushing component 1 is sleeved on the upper end of the outer wall of the first outer tube 12, and the first part of second outer tube body 2211 of the lower bushing component 2 is sleeved on the lower end of the outer wall of the first outer tube 12. In addition, after the upper end of the first inner tube 11 is sleeved on the outer wall of the second inner tube body 211 of the upper bushing component 2, the upper end of the first inner tube 11 is connected with the lower end of the second outer tube body 221 of the upper bushing component 2. Similarly, after the lower end of the first inner tube 11 is sleeved on the outer wall of the second inner tube body 211 of the lower bushing component 2, the lower end of the first inner tube 11 is connected with the lower end of the second outer tube body 221 of the lower bushing component 2, so that the two second rubber bodies 23 may be in a continuous state with the first rubber body 13, thus avoiding the problem that the existing rubber bodies has discontinuous axial rigidity change due to idle stroke during being squeezed. The axial rigidity of the bushing in the present embodiment changes continuously, and the driving smoothness of a vehicle may be improved.

Further, in order to improve the installation stability of the upper end face of the first outer tube 12 and the lower end face of the second outer tube body 221 of the upper bushing component 2, and the installation stability of the lower end face of the first outer tube 12 and the upper end face of the second outer tube body 221 of the lower bushing component 2, in the present embodiment, roughness of the lower end face of the second outer tube body 221 of the upper bushing component 2 and the roughness of the upper end face of the second outer tube body 221 of the lower bushing component 2 may be increased. For the method of increasing the roughness, a plurality of protruding points 24 may be uniformly disposed on an end face of the second outer tube body 221 away from the bushing body 1, and shapes of the protruding points is at least one of a circle and a rectangle, and the specific shape of the protruding points may be defined according to actual requirements.

According to an embodiment of the present application, in the axial direction of the first inner tube 11, a shape of the protruding structure 111 is arc-shaped, and the arc-shaped is a convex arc relative to the outer wall of the first inner tube. A first transition arc 112 is disposed between one end of the protruding structure 111 and one end of the first inner tube 11, and a second transition arc 113 is disposed between the other end of the protruding structure 111 and the other end of the first inner tube 11.

Particularly, as shown in FIG. 3, in the axial direction of the first inner tube 11, the convex structure 111 is arc-shaped, and the arc is a convex arc relative to the outer wall of the first inner tube, so that the first inner tube 11 may be regarded as a hollow cylindrical with the axial middle section arched outward. Moreover, a first transition arc 112 is disposed between one end (upper end) of the protruding structure 111 and the upper end of the first inner pipe 11, and a second transition arc 113 is disposed between the other end (lower end) and the lower end of the first inner pipe 11. It may be seen from the figure that, the cross-sectional shape of the first inner pipe 11 is similar to the shape of a lantern, that is, the protruding structure 111 is an arc-shaped protrusion with both flat ends and a parabolic middle section, and the load is evenly distributed along the chord. In this way, the radial rigidity of the first inner tube 21 may be increased, so that the radial rigidity of the bushing body 1 is increased and the torsional rigidity of the bushing body 1 is reduced, thereby the driving smoothness and handling stability of a vehicle is improved. It should be noted that, the protruding structure 111 may also be a parabola shape in which the first transition arc 112, the middle arc and the second transition arc 113 are connected, or it may be merely a middle arc, and the arc is a parabola shape. In the present embodiment, the specific shape of the cross-section of the protruding structure 111 may be set according to the actual situation. It should be noted that, the parabola herein is not exactly the same as the parabola shape in geometry, but merely similar to the parabola shape in geometry.

Particularly, in order to make force being evenly distributed on the first rubber body 13, the protruding structure 111 is located in a middle area of the outer wall of the first inner tube 11, and both the transition arcs are symmetrically arranged, and the radius of the fillets of the two transition arcs may be as large as possible, so that the fatigue durability of the bushing body 1 may be improved.

In an alternative embodiment of the present application, to make the first outer tube 12 of the bushing body 1 has larger rigidity and strength and, meanwhile increase the compression amount of the first elastic body 13, the length of the first gap between two adjacent arc-shaped plates 121 in the present embodiment is between 2-3 mm. Of course, the first gap may also have other length, and the length of the first gap in the present embodiment is not limited, and the specific length of the first gap needs to be to be set according to the actual situation.

Compared with the conventional technology, the bushing according to the present application has at least the following advantages:

In the embodiment of the present application, by disposing the protruding structure on the outer wall of the first inner tube, the radial rigidity of the bushing body may be improved, and the torsional rigidity of the bushing body may be reduced. In practical application, the axial rigidity of the bushing body may be increased correspondingly with the increase of the radial rigidity of the bushing body. The first outer tube includes a plurality of arc-shaped plates which are distributed at intervals along the circumferential direction of the first outer tube. Since a first gap exists between two adjacent arc-shaped plates, in this way, under the condition that the bushing body squeezes the first rubber body in the process of using, the compression amount of the first rubber body is increased, so that the torsional rigidity of the bushing body may be reduced. It may be seen that, the bushing of the present embodiment may simultaneously satisfy large radial rigidity, large axial rigidity and low torsional rigidity, so that the vehicle may both satisfy driving smoothness and manipulation stability.

According to the embodiment of the present application, a suspension system is further provided, and the suspension system includes the bushing above-mentioned.

In the suspension system, one end of the control arm is usually connected with the sub-frame by the bushing. Particularly, the bushing is installed in an inner hole of a control arm, and is connected with a sub-frame in the axial direction, and the other end of the control arm is connected with a steering knuckle. Under the condition that the suspension system is in an operation state, the transmission direction of force outside the bushing is transverse (left and right direction) as shown in FIG. 4, and the external load is transmitted to the control arm by means of a tire, and is transmitted to the bushing via the control arm, and is transmitted to the sub-frame subsequently. Inside the bushing, based on the rubber body, the transmission direction of force is radial and circumferential.

Particularly, the specific structure and operation principle of the bushing have been described in detail above, and will not be repeated herein.

Compared with the conventional technology, the suspension system according to the present application has at least the following advantages:

According to the embodiment of the present application, the suspension system includes the bushing. In the bushing, by disposing the protruding structure on the outer wall of the first inner tube, the radial rigidity of the bushing body may be improved, and the torsional rigidity of the bushing body may be reduced. In practical application, the axial rigidity of the bushing body may increase correspondingly with the increase of the radial rigidity of the bushing body. The first outer tube includes a plurality of arc-shaped plates which are distributed at intervals along a circumferential direction of the first outer tube. Since a first gap exists between two adjacent arc-shaped plates, in this way, under the condition that the bushing body squeezes the first rubber body in the process of using, the compression amount of the first rubber body is increased, so that the torsional rigidity of the bushing body may be reduced. It may be seen that, the bushing of the present embodiment may simultaneously satisfy large radial rigidity, large axial rigidity and low torsional rigidity, so that the vehicle may both satisfy the driving smoothness and the manipulation stability.

According to an embodiment of the present application, a vehicle is further provided, and the vehicle includes the suspension system above-mentioned.

Particularly, the vehicle includes the suspension system, and the suspension system includes the bushing. The specific structure and operation principle of the bushing have been described in detail above, and will not be repeated herein.

Compared with the conventional technology, the vehicle has the same advantages as the suspension system, which are not described in detail herein.

The above description is merely preferable embodiments of the present application, and is not indented to limit the present application. Any modifications, equivalent substitutions and improvements that are made within the spirit and the principle of the present application should fall within the protection scope of the present application.

## Claims

1. A bushing, **characterized in** comprising a bushing body, the bushing body (1) comprises a first inner tube (11), a first outer tube (12) and a first rubber body (13);
an outer wall of the first inner tube (11) is provided with a protruding structure (111);
the first outer tube (12) comprises a plurality of arc-shaped plates (121), the plurality of arc-shaped plates (121) are distributed at intervals along a circumferential direction of the first outer tube (12), a first gap exists between two adjacent arc-shaped plates (121), the first outer tube (12) is sleeved on the outer wall of the first inner tube (11), and a second gap exists between the first outer tube (12) and the first inner tube (11);
the first rubber body (13) is disposed in the second gap and for connecting the first inner tube (11) and the first outer tube (12) by vulcanizing.

2. The bushing according to claim 1, **characterized in that**, the plurality of the arc-shaped plates (121) are evenly distributed.

3. The bushing according to claim 1, **characterized in that**, the bushing further comprises a bushing component (2);
both ends of the bushing body (1) are respectively provided with the bushing component (2), and the two bushing components (2) are symmetrically arranged, one bushing component (2) is in interference fit with one end of the bushing body (1), and the other bushing component (2) is in interference fit with the other end of the bushing body (1).

4. The bushing according to claim 3, **characterized in that**, each of the two bushing components (2) comprises a second inner tube (21), a second outer tube (22) and a second rubber body (23);
the second outer tube (22) is sleeved on an outer wall of the second inner tube (21), a third gap exists between the second outer tube (22) and the second inner tube (21), and the second rubber body (23) is disposed in the third gap for connecting the second inner tube (21) and the second outer tube (22) by vulcanizing;
one end of the first inner tube (11) is sleeved on the outer wall of one of the second inner tubes (21) and is in interference fit with the one of the second inner tubes (21), and the other end of the first inner tube (11) is sleeved on the outer wall of the other second inner tube (21) and is in interference fit with the other second inner tube (21);
one of the second outer tubes (22) is sleeved on the one end of the outer wall of the first outer tube (12) and is in interference fit with the one end of the outer wall of the first outer tube (12), and the other second outer tube (22) is sleeved on the other end of the outer wall of the first outer tube (12) and is in interference fit with the other end of the outer wall of the first outer tube (12).

5. The bushing according to claim 4, **characterized in that**, each of the second inner tubes (21) comprises a second inner tube body (211) and a first annular end seat (212) which are coaxially arranged;
the first annular end seat (212) is disposed at one end of the second inner tube body (211) away from the bushing body (1), and a cross-sectional area of the first annular end seat (212) is larger than that of the second inner tube body (211);
one end of the first inner tube (11) is sleeved on an outer wall of one of the second inner tube bodies (211) and is in interference fit with the one of the second inner tube bodies (211), and the other end of the first inner tube (11) is sleeved on an outer wall of the other second inner tube body (211) and is in interference fit with the other second inner tube body (211).

6. The bushing according to claim 5, **characterized in that**, the second outer tube (22) is sleeved on the second inner tube body (211) and comprises a second outer tube body (221) and a second annular end seat (222) which are coaxially arranged;
the second outer tube body (221) is away from the first annular end seat (212), the second annular end seat (222) is close to the first annular end seat (212), and a cross-sectional area of the second annular end seat (222) is larger than that of the second outer tube body (221);
one end of the one of the second outer tube bodies (221) away from the second annular end seat (222) is sleeved on one end of the outer wall of the first outer tube (12) and is in interference fit with one end of the outer wall of the first outer tube (12), and the other end of the other second outer tube body (221) away from the second annular end seat (222) is sleeved on the other end of the outer wall of the first outer tube and is in interference fit with the other end of the outer wall of the first outer tube (12).

7. The bushing according to claim 6, **characterized in that**, a third sub-gap exists between the outer wall of the second inner tube body (211) and an inner wall of the second outer tube body (221);
a fourth sub-gap exists between an end face of the first annular end seat (212) away from the bushing body (1) and an end face of the second annular end seat (222) away from the bushing body (1);
the third gap is formed by the third sub-gap and the fourth sub-gap.

8. The bushing according to claim 1, **characterized in that**, in an axial direction of the first inner tube (11), a shape of the protruding structure (111) is arc-shaped, and the arc-shaped is a convex arc relative to the outer wall of the first inner tube;
a first transition arc (112) is disposed between one end of the protruding structure (111) and one end of the first inner tube (11), and a second transition arc (113) is disposed between the other end of the protruding structure (111) and the other end of the first inner tube (11).

9. The bushing according to claim 4, **characterized in that**, the bushing component (2) makes axial rigidity to be increased by squeezing the second rubber body (23) by means of the second inner tube (21) and the second outer tube (22); and
the axial rigidity is a sum of axial rigidity provided by the first rubber body (13) and axial rigidity provided by the two second rubber bodies (23).

10. The bushing according to claim 1, **characterized in that**, the first rubber body (13) of the bushing body (1) makes radial rigidity to be increased by squeezing the first rubber body (13) by means of the first inner tube (11) and the first outer tube (12); and
an increase amount of the radial rigidity is larger than an increase amount of axial rigidity generated by the shearing of the first rubber body (13).

11. The bushing according to claim 5, **characterized in that**, the one end of the first inner tube (11) is sleeved on the outer wall of the second inner tube body (211) of the one bushing component (2) and is in interference fit with the second inner tube body (211) by pressing;
the other end of the first inner tube (11) is sleeved on the outer wall of the second inner tube body (211) of the other bushing component (2) and is in interference fit with the second inner tube body (211) by pressing.

12. The bushing according to claim 6, **characterized in that**, a diameter of the second annular end seat (222) is larger than that of the second outer tube body (221).

13. The bushing according to claim 7, **characterized in that**, a length of the second outer tube (22) is less than that of the second inner tube body (211), and the position where the second outer tube (22) is sleeved on the outer wall of the second inner tube body (211) is related to sizes of the third sub-gap and the fourth sub-gap, the size of the third sub-gap and the size of the fourth sub-gap are related to the structure of the second rubber body (23), and the structure of the second rubber body (23) is related to the magnitude of the axial rigidity of the bushing component (2).

14. The bushing according to claim 7, **characterized in that**, the second outer tube body (221) comprises a first part of second outer tube body (2211) and a second part of second outer tube body (2212), and the first part of second outer tube body (2211) is close to the bushing body (1);
the second part of second outer tube body (2212) is away from the bushing body (1), and an inner diameter of the first part of second outer tube body (2211) is larger than that of the second part of second outer tube body (2212).

15. The bushing according to claim 7, **characterized in that**, the first part of second outer tube body (2211) of the one of bushing components (2) is sleeved on the one end of the outer wall of the first outer tube (12);
the first part of second outer tube body (2211) of the other bushing component (2) is sleeved on the other end of the outer wall of the first outer tube (12);
after the one end of the first inner tube (11) is sleeved on the outer wall of the second inner tube body (211) of the one of bushing components (2), the one end of the first inner tube (11) is connected with the other end of the second outer tube body (221) of one bushing component (2);
after the other end of the first inner tube (11) is sleeved on the outer wall of the second inner tube body (211) of the other bushing component (2), the other end of the first inner tube (11) is connected with the lower end of the second outer tube body (221) of the other bushing component (2).

16. A suspension system, **characterized in** comprising the bushing according to any one of claims 1-15.

17. A vehicle, **characterized in** comprising the suspension system according to claim 16.
